(19) **Europäisches Patentamt / European Patent Office / Office européen des brevets**

(11) **EP 1 373 145 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **02732334.4**

(22) Anmeldetag: **21.03.2002**

(51) Int Cl.:
***C02F 1/52*** *(2006.01)*

(86) Internationale Anmeldenummer:
**PCT/DE2002/001026**

(87) Internationale Veröffentlichungsnummer:
**WO 2002/076890 (03.10.2002 Gazette 2002/40)**

(54) **VERFAHREN UND MESSANORDNUNG ZUR AUTOMATISCHEN BESTIMMUNG DES AUFKONZENTRIERUNGSFAKTORS VON KONDITIONIERTEM KLÄRSCHLAMM**

METHOD AND MEASURING DEVICE FOR AUTOMATICALLY DETERMINING THE CONCENTRATION FACTOR OF CONDITIONED SEWAGE SLUDGE

PROCEDE ET DISPOSITIF DE MESURE POUR LA DETERMINATION AUTOMATIQUE DU FACTEUR DE CONCENTRATION DES BOUES DE CURAGE CONDITIONNEES

(84) Benannte Vertragsstaaten:
**ES FR GB IT PT**

(30) Priorität: **27.03.2001 DE 10115179**

(43) Veröffentlichungstag der Anmeldung:
**02.01.2004 Patentblatt 2004/01**

(73) Patentinhaber: **Clausthaler Umwelttechnik-Institut Gmbh (Cutec - Institut)**
**38678 Clausthal-Zellerfeld (DE)**

(72) Erfinder:
 • **SCHRÖDER, Christian**
  **38678 Clausthal-Zellerfeld (DE)**
 • **SIEVERS, Michael**
  **38678 Clausthal-Zellerfeld (DE)**

(74) Vertreter: **Gerstein, Hans Joachim et al**
**Gramm, Lins & Partner**
**Theodor-Heuss-Strasse 1**
**38122 Braunschweig (DE)**

(56) Entgegenhaltungen:
WO-A-98/18730     DE-A- 3 743 428
DE-A- 19 617 528   US-A- 4 783 269
US-A- 5 037 559

 • **CHR. SCHRÖDER, H. BORMANN, T. ONYECHE, O. SCHLÄFER, M. SIEVERS, A. VOGELPOHL: "Optimierung der kommunalen Klärschlammentwässerung durch On-line-Regelung der Konditionierung" CHEMIE INGENIEUR TECHNIK, Bd. 72, Nr. 9, September 2000 (2000-09), Seite 1115 XP002210884**
 • **GRIJSPEERDT K ET AL: "Image analysis to estimate the settleability and concentration of activated sludge" WATER RESEARCH, ELSEVIER SCIENCE PUBLISHERS, AMSTERDAM, NL, Bd. 31, Nr. 5, 1. Mai 1997 (1997-05-01), Seiten 1126-1134, XP004058652 ISSN: 0043-1354**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Messanordnung zur automatischen Bestimmung des Aufkonzentrierungsfaktors von konditioniertem Klärschlamm.

Durch den Einsatz von Abwasserreinigungsanlagen im kommunalen und industriellen Bereich entsteht Klärschlamm als Folge der Abtrennung partikulärer Abwasserinhaltsstoffe sowie als Folge der Produktion von Überschussbiomasse. Klärschlamm ist eine kolloide Suspension, besteht aus organischen und anorganischen, festen und gelösten Bestandteilen, die in den unterschiedlichsten Verhältnissen zueinander vorliegen.

Bevor der Klärschlamm als Rest-/Wertstoff landwirtschaftlich genutzt, deponiert oder verbrannt wird, erfolgt eine Volumenreduzierung durch Entwässerung. Hierbei kommt den mechanischen Entwässerungsverfahren wie zum Beispiel Filtration und Zentrifugation eine besondere Bedeutung zu, weil die Kosten dieser Verfahren im Vergleich zu der nachfolgenden Behandlung wesentlich geringer sind, so dass sich jede Optimierung der mechanischen Entwässerung positiv auf die Gesamtkosten auswirkt.
In Zukunft wird die Bedeutung der mechanischen Entwässerung weiter zunehmen, weil mangels Alternativen zunehmend mehr Klärschlamm mit den besonders kostenintensiven thermischen Verfahren (Trocknung, Verbrennung, Einschmelzung) entsorgt oder verwertet werden.

Die Entwässerbarkeit von Klärschlämmen hängt von vielen Einflussgrößen ab, die sich zum Teil gegenseitig beeinflussen. Hierzu gehören zum Beispiel der Anteil an organischer Trockensubstanz, das Ladungspotential, die Oberflächeneigenschaften, der Anteil feiner Partikel, der Ionenhintergrund im Schlammwasser u.v.a..

Durch Zugabe von Flockungs- und Flockungshilfsmitteln werden die Entwässerungseigenschaften des Schlammes positiv beeinflusst. Dieser mit Konditionieren bezeichnete Vorgang wurde in jüngerer Zeit durch gezielte Flockenbildung, wie zum Beispiel der Pelletierungsflockung, deutlich verbessert. Daneben wurden auch die mechanischen Schlammentwässerungsanlagen und die Maschinentechnik in den letzten Jahren wesentlich verbessert.

Trotzdem treten im Betrieb häufig große Schwankungen hinsichtlich des Entwässerungsgrades auf, weil sich die Entwässerungseigenschaften zum Teil sehr kurzfristig ändern. Aufgrund der zahlreichenden Einflussfaktoren ist es derzeit sehr schwierig, das voraussichtliche Entwässerungsergebnis vorher zu bestimmen und den Konditionierungsprozess dementsprechend anzupassen.

Eine Möglichkeit der Optimierung des Konditionierungsprozesses ist die Analyse der konditionierten oder geflockten Klärschlämme. Hierzu wurden in der Vergangenheit verschiedene Messverfahren entwickelt.

In M. Nagel und P. Ay - Verbesserung der Entwässerungseigenschaften von Schlämmen durch den gezielten Aufbau von Flockenstrukturen auf der Basis detaillierter morphologischer Analysen in 4. GVC Abwasser-Krongress 1999, Verfahrenstechnik der Abwasser- und Schlammbehandlung - Additive und prozessintegrierte Maßnahmen, 6. bis 8. September 1999, Kongresszentrum Bremen, VDI Gesellschaft Verfahrenstechnik und Chemieingenieurwesen, Band 2 wird eine Verbesserung der Entwässerungseigenschaften durch den gezielten Aufbau von Flockenstrukturen auf Basis von lichtmikroskopisch erfassten Bilddaten beschrieben. Die Bilddaten werden von Flocken aufgenommen, die in dünnen Scheiben geschnitten sind, mittels Bildanalyseverfahren verarbeitet und anhand einer Clusteranalyse bewertet. Dies erlaubt ein Bewertung der inneren Struktur von Flocken anhand der Modellvorstellung, dass die Permeabilität und Entwässerbarkeit von Flocken durch eine ungleichmäßige Verteilung der Makro- und Mikroporen zwischen sogenannten Clustern bestimmt wird. Die beschriebene Anlayse der inneren Flockenstruktur ist aufgrund der dargestellten Herstellung von dünnen Scheiben als Online-Messverfahren weniger gut geeignet.

In R. Kayser und Th. Nellenschulte - Partikelgrößenanalyse von Klärschlämmen, Konditionierbarkeit und Entwässerungsverhalten, in CAV (chemie-anlagen + verfahren) 1991, Dezember, Seiten 27 und 28 ist ein Partikelanalysesystem zur Bestimmung der Flockengröße in Klärschlamm und zum Nachweis des Entwässerungsverhaltens beschrieben. Mit Hilfe eines Laserscanners werden die in einem Rührer in Turbulenz versetzten Partikel gescannt und Informationen, wie Verteilungsfunktion, mittlerer Äquivalentdurchmesser, Summe der gescannten Partikel etc. berechnet. Der Nachteil ist, dass das beschriebene Verfahren nicht den gesamten Partikelgrößenbereich der Flocken abdeckt. Aus den berechneten Informationen lassen sich deshalb keine Rückschlüsse auf den Aufkonzentrierungsfaktor treffen.

In Ch. Schröder, H. Klotzbücher, T. Onyeche. O. Schläfer und M. Sievers - Entwicklung eines photooptischen Sensors zur Optimierung der mechanischen Entwässerung von Klärschlämmen, in: Chemie Ingenieur Technik (70), 9, 1998, Seiten 1157 und 1158 wird eine Online-Analyse der Klärschlammflockung mittels Bildverarbeitung photooptisch aufgenommener Bilddaten beschrieben. Aus den mit einer CCD-Zeilenkamera zeilenweise aufgenommenen Bilddaten einer Aufsicht auf einen Klärschlammstrom werden relative Flockengrößenverteilungen mittels Bildverarbeitung ermittelt. Für den Klärschlamm einer kommunalen Kläranlage wurde eine Korrelation zwischen dem gemittelten Summenwert der Sehnenlängenverteilungen und dem Entwässerungsergebnis erkannt. Allerdings lag das erzielte maximale Entwässerungsergebnis mit ca. 20% Trockensubstanz weit unter den üblichen Entwässerungsergebnissen von ca. 30% bis 40% Trockensubstanz. Die Ergebnisse sind deshalb nicht repräsentativ für eine Regelung von Konditionierungsprozessen mit Entwässerungsergebnissen über 30%. Der gemittelte Summenwert der Sehnenlängenverteilung ist als Parameter zur sicheren Bestimmung des Aufkonzentrierungsfaktors nicht ausreichend.

In dem US-Patent 5,037,559 A ist ein Konditionierverfahren beschrieben, bei dem der Zusatz von Flockungsmittel als Funktion der Flockenanzahl, Flockengröße und/oder Flockenstruktur gesteuert wird.

Auch in der DE 37 43 428 A ist in allgemeiner Form offenbart, die Störung der Flockenmittelzugabe in Abhängigkeit von Menge, Größe und/oder Struktur der Schlammflocken zu steuern. Aus der Verteilung von Grautönen über einer Bildpunktmatrix wird eine Information über die Menge, Größe und/oder Struktur der von einer Lichtquelle angeleuchteten Schlammflocken gewonnen.

In der DE 196 17 528 ist ein die Flockengröße erfassendes Messgerät mit einer Vielzahl von Sensorelementen erwähnt.

Aufgabe der Erfindung war es daher, ein verbessertes Verfahren zur automatischen Bestimmung des Aufkonzentrierungsfaktors von konditioniertem Klärschlamm zu schaffen.

Die Aufgabe wird durch die Schritte gelöst von:

- Erfassen der Flockenstruktur des Klärschlammstroms durch eindimensionale photooptische Auflichtmessung von Bildzeilen der Grauwertverläufe einer Klärschlammaufsicht quer zur Strömungsrichtung;

- Bestimmen der Sehnenlängen der erfassten Flockenstruktur aus den Grauwertverläufen, wobei die Sehnenlänge der Abstand zwischen einem relativen Grauwert-Maximalwert und einem benachbarten relativen Grauwert-Minimalwert ist;

- Berechnen der Häufigkeitsverteilung der Sehnenlängen;

- Bestimmen des Aufkonzentrierungsfaktors in Abhängigkeit von Parametern, die aus den Sehnenlängen und der Häufigkeitsverteilung der Sehnenlängen ermittelt werden.

Es hat sich überraschend herausgestellt, dass der Aufkonzentrierungsfaktor von der Sehnenlänge bzw. Lauflänge der erfassten Flockenstrukturen und daraus ermittelten Parametern und Häufigkeitsverteilungen abhängig ist. Der Aufkonzentrierungsfaktor kann somit durch Auswertung der zweidimensional aufgenommenen Grauwertverläufe eines Klärschlammstroms bestimmt werden.

Besonders vorteilhaft ist es, einen Steigungsparameter als Steigung der Häufigkeitsverteilungsfunktion für die Summenhäufigkeit von 0,5 zu bestimmen und den Aufkonzentrierungsfaktor in Abhängigkeit von dem Steigungsparameter zu ermitteln. Es hat sich nämlich überraschend herausgestellt, dass der Steigungsparameter der Häufigkeitsverteilungsfunktion an dem Punkt, bei dem die Summenhäufigkeit 0,5 beträgt sich annähernd proportional zu dem Aufkonzentrierungsfaktor ist und diese Steigung im Mittelwert der Häufigkeitsverteilungsfunktion somit als Kennwert für den Aufkonzentrierungsfaktor hervorragend geeignet ist.

Es ist vorteilhaft, Größenbereiche der Partikelgrößen festzulegen, wobei ein Bereich für kleine Partikelgrößen, ein Bereich für mittlere Partikelgrößen und ein Bereich für große Partikelgrößen definiert wird. Zur Bestimmung des Aufkonzentrierungsfaktors wird als Parameter mindestens ein Verhältnisparameter aus einem Verhältnis der Anzahl von Partikeln mit einer Partikelgröße eines Größenbereiches zu der Anzahl von Partikeln mit einer Partikelgröße eines anderen Größenbereiches bestimmt und der Aufkonzentrierungsfaktor unter anderem in Abhängigkeit von dem berechneten Verhältnisparameter bestimmt.

Als Verhältnisparameter kann ein Maximal-Teilchengrößenverhältnis aus dem Quotient der Anzahl der Partikel mit einer mittleren Partikelgröße zu der Anzahl der Partikel mit einer großen Partikelgröße berechnet werden. Es kann auch ein Minimal-Teilchengrößenverhältnis als Verhältnisparameter aus dem Quotient der Anzahl der Partikel mit einer mittleren Partikelgröße zu der Anzahl der Partikel mit einer kleinen Partikelgröße berechnet werden. Weiterhin kann ein Maximal-Minimal-Teilchengrößenverhältnis aus dem Quotient der Anzahl der Partikel mit einer großen Partikelgröße zu der Anzahl der Partikel mit einer kleinen Partikelgröße berechnet werden.

Diese Verhältnisparameter können getrennt voneinander oder zusammen zur Bestimmung des Aufkonzentrierungsfaktors verwendet werden.

Die Festlegung der Größenbereiche der Partikelgrößen sollte beispielsweise derart erfolgen, dass die Partikelgrößen des Größenbereiches für kleine Partikelgrößen etwa 42 $\mu$m bis 430 $\mu$m betragen. Die Partikelgrößen des Größenbereiches für mittlere Partikelgrößen sollten etwa 430 $\mu$m bis 2,8 mm betragen. Die Partikelgrößen des Größenbereiches für große Partikelgrößen sollten mehr als 2,8 mm betragen.

Die Häufigkeitsverteilungsfunktion wird somit in die genannten drei Größenbereiche aufgeteilt.

Als weiterer Parameter zur Bestimmung des Aufkonzentrierungsfaktors kann das Integral über die Häufigkeitsverteilung für Summenhäufigkeiten X von 0,1 bis 0,9 als sogenannter Integralparameter mit der Gleichung

$$I(\aleph)= \int\limits_{i=\aleph_{10}}^{\aleph_{90}} n_i \cdot G_i(\aleph),$$

wobei $G_i$ die Partikelgröße und $n_i$ die Gesamtanzahl von Partikeln einer Partikelgröße ist.

Als weiterer Parameter kann ein sogenannter Volumenparameter V (gesehenes Volumen) aus der Summe der Produkte der Anzahl von Partikeln in einem Größenbereich mit der dritten Potenz der mittleren Partikelgröße in diesem Größenbereich für alle definierten Größenbereiche berechnet und zur Bestimmung des Aufkonzentrierungsfaktors verwendet werden.

Der Aufkonzentrierungsfaktor wird vorteilhafterweise in Abhängigkeit von der Summe aus dem Maximal-Teilchengrößenverhältnis, dem Steigungsparameter und dem Integralparameter bestimmt. Die Kombination dieser drei Parameter hat sich als besonders zuverlässig herausgestellt.

Eine Messanordnung zur automatischen Bestimmung des Aufkonzentrierungsfaktors hat

- eine Durchflussküvette für den Klärschlammstrom mit einem Sichtfenster,

- eine Bildzeilenkamera, die angrenzend an das Sichtfenster angeordnet ist,

- eine Beleuchtungseinheit zur Ausleuchtung des Klärschlammstroms, sowie

- eine elektronische Auswerteeinheit, die an die Bildzeilenkamera angeschlossen ist.

Die elektronische Auswerteeinheit ist erfindungsgemäß zur Durchführung des oben beschriebenen Verfahrens ausgebildet.

Der Klärschlammstrom sollte im Bereich des Sichtfensters laminar strömen. Die Durchflussküvette sollte daher so ausgebildet sein, dass sie eine solche laminare Strömung in diesem Bereich gewährleistet.

Für einen kontinuierlichen Konditionierungsprozess sollte die Auswerteeinheit ein Steuersignal zur Steuerung eines Flockungsapparates generieren, so dass z.B. die Zugabe von Flockungsmitteln oder Flockungshilfsmitteln in Abhängigkeit von dem berechneten Aufkonzentrierungsfaktor erfolgt oder die Flockenausbildung in einem Flockungsreaktor geregelt wird.

Im Gegensatz zu den bekannten Verfahren, bei denen das absolute Entwässerungsergebnis in Form des Trockensubstanzgehaltes bestimmt wurde, hat sich nunmehr überraschenderweise gezeigt, dass aus den Parametern ein relatives Entwässerungsergebnis in Form eines Aufkonzentrierungsfaktors bildanalytisch vorausbestimmt werden kann. Dieser Aufkonzentrierungsfaktor gibt das Verhältnis der Trockensubstanzkonzentration des entwässerten Klärschlamms zu der Trockensubstanzkonzentration des zu konditionierenden Klärschlammes wieder. Dabei war außerdem die Erkenntnis überraschend, dass der Aufkonzentrierungsfaktor unabhängig vom spezifischen auf die Trockensubstanz bezogenen Flokkungsmittelverbrauch vorausgesagt werden konnte.

Es hat sich weiterhin gezeigt, dass der mit dem erfindungsgemäßen Verfahren ermittelte Aufkonzentrierungsfaktor auch für grundsätzlich verschiedene Konditionierungsprozesse gleichzeitig anwendbar ist. So konnte beispielsweise der Aufkonzentrierungsfaktor bei verschiedenen Konditionierungsprozessen, zum Beispiel bei einem Flockungsmitteleintrag mittels eines Inline-Mixers und nachgeschalteter Rohrflockung einerseits, sowie nachgeschalteter gezielter Flockenausbildung in einem Flockungsreaktor andererseits bestimmt werden. Dabei hat sich gezeigt, dass der schlechtere Konditionierungsprozess mit der Rohrflockung zu einem bildanalytisch erkennbaren kleineren Aufkonzentrierungsfaktor führt, obwohl der Massendurchsatz an Trockensubstanz in etwa gleich groß und der auf die Trockensubstanz bezogene Flockungsmittelverbrauch bei der Rohrflockung größer war.

Durch die Vorausbestimmung des Aufkonzentrierungsfaktors bietet sich nunmehr die Möglichkeit, unabhängig von dem Konditionierungsprozess eine Zielkonzentration für den entwässerten Klärschlamm vorzugeben und eine bedarfsgerechte Flockungsmittelzugabe online zu regeln. Hierzu kann beispielsweise ein Online-Messgerät für die Trockensubstanzkonzentration im zu konditionierenden Schlamm zu Hilfe genommen werden. Die zur Zeit üblichen Überdosierungen an Flockungsmitteln lassen sich dadurch vorteilhaft minimieren.

Die Erfindung wird nachfolgend anhand von Ausführungsbeispielen mit den beigefügten Zeichnungen näher erläutert. Es zeigen:

Figur 1 -   eine schematische Darstellung einer Messanordnung zur automatischen Bestimmung des Aufkonzentrierungsfaktors;

Figuren 2 a) + b) -  beispielhaft aufgenommene und aufbereitete Grauwertverläufe einer Klärschlammaufsicht zur Ermittlung der Sehnenlängen;

Figur 3 -  ein Häufigkeitsverteilungsdiagramm als Anzahl Summenverteilung der Sehnenlängen, das in drei Größenbereiche unterteilt ist;

Figur 4 -  ein Anzahl-Dichteverteilungsdiagramm der Sehnenlängen;

Figur 5 -  ein Prozessablaufdiagramm zur geregelten Klärschlammkonditionierung einer Kläranlage;

Figur 6-  ein Abhängigkeitsdiagramm des Maximal-Minimal-Teilchengrößenverhältnisses von der Aufkonzentration;

Figur 7 -  ein Abhängigkeitsdiagramm des Maximal-Teilchengrößen-verhältnisses von der Aufkonzentration;

Figur 8 -  ein Abhängigkeitsdiagramm des Steigungsparameters von der Aufkonzentration;

Figur 9 -  ein Abhängigkeitsdiagramm des Kehrwerts des Integralparameters von der Aufkonzentration;

Figur 10 -  ein Abhängigkeitsdiagramm eines Summenregelparameters von der Aufkonzentration.

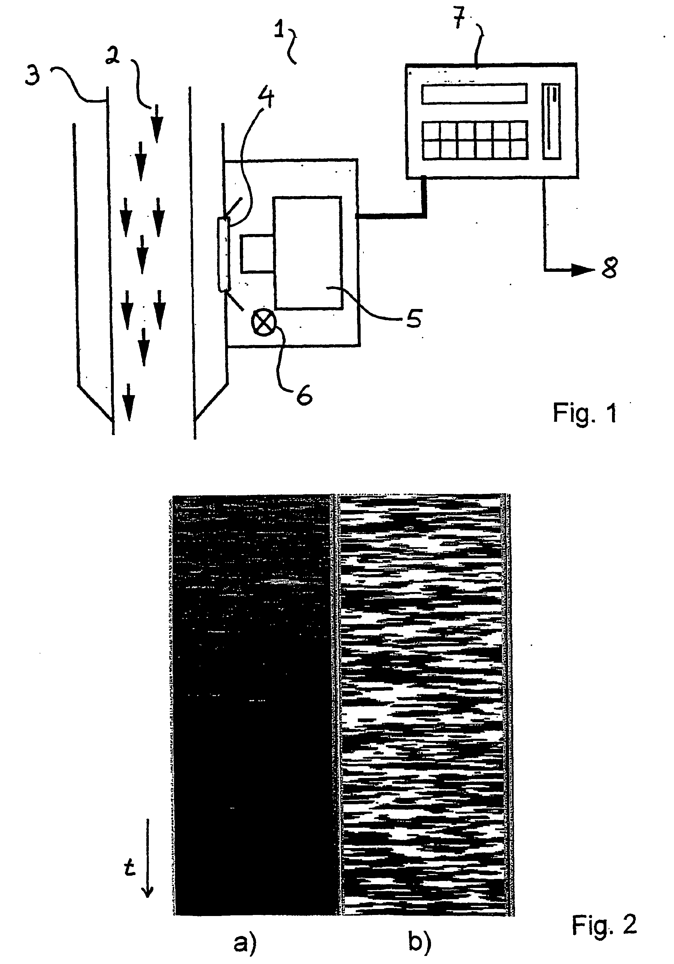

Die Figur 1 lässt eine schematische Darstellung einer Messanordnung 1 zur automatischen Bestimmung des Aufkonzentrierungsfaktors von konditioniertem Klärschlamm erkennen, der als Klärschlammstrom 2 im Prozess kontinuierlich durch eine Durchflussküvette 3 geleitet wird. Die Durchflussküvette 3 hat ein Sichtfenster 4 zur Betrachtung einer Klärschlammaufsicht, um die Flockenstruktur des Klärschlammstroms 2 erfassen zu können. Hierzu ist eine Bildzeilenkamera 5 angrenzend vor das Sichtfenster 4 angebracht. Die Bildzeilenkamera 5 ist vorzugsweise eine CCD-Zeilenkamera.

Damit ein Kontrastbild in Form eines Grauwertverlaufes von der Bildzeilenkamera 5 erkannt werden kann, ist eine Beleuchtungseinheit 6 zur Ausleuchtung des Klärschlammstroms 2 vorgesehen.

An die Bildzeilenkamera 5 ist eine elektronische Auswerteeinheit 7 angeschlossen, um die zeilenweise aufgezeichneten Grauwertverläufe der eindimensional betrachteten Klärschlammaufsicht auszuwerten und automatisch einen Aufkonzentrierungsfaktor des Klärschlamms zu bestimmen.

Die Auswerteeinheit 7 hat einen Steuerungsausgang 8, um einen Flockungsapparat und/oder eine Flockungsmittel- bzw. Flockungshilfsmittel-Dosierung zu steuern und damit den Konditionierungsprozess in Abhängigkeit von dem bestimmten Aufkonzentrierungsfaktor zu kontrollieren.

Im Unterschied zu dem absoluten Trockensubstanzgehalt des konditionierten Klärschlamms gibt der Aufkonzentrierungsfaktor das Verhältnis der Trockensubstanzkonzentration des entwässerten Klärschlamms zu der Trockensubstanzkonzentration des zu konditionierenden Klärschlamms zu Beginn des Konditionierungsprozesses wieder. Der Aufkonzentrierungsfaktor ist damit ein Maß für die Qualität des Entwässerungs- bzw. Konditionierungsprozesses.

Die Figur 2a) lässt beispielhaft ein aufgezeichnetes Grauwertbild erkennen, wobei der an der Bildzeilenkamera 5 vorüberströmende Klärschlammstrom 2 zeilenweise über die Zeit t aufgenommen ist. Das Bild wird mit bekannten Bildanalyseverfahren so aufbereitet, dass der Kontrast zwischen Dunkel- und Hell-Stellen, das heißt die Grauwertdynamik vergrößert wird (Figur 2b). Es kann auch eine Glättung des Grauwertverlaufes mittels des gleitenden Durchschnitts durchgeführt werden. Aus dem aufbereiteten Grauwertverlauf werden in bekannter Weise die Sehnenlängen berechnet. Dieses Verfahren, das nicht die Identifikation von Einzelpartikeln voraussetzt, macht sich zu Nutze, dass die Partikel an dem Sichtfenster dicht gepackt sind und Partikelübergänge und Zwischenräume im Grauwertbild durch relative Minima und Maxima repräsentiert werden. Mit einem Extremwertverfahren werden also die Maxima und Minima im Grauwertbereich einer Zeile analysiert. Hierbei werden alle Maxima verwendet, die um einen bestimmten Differenzwert größer sind als das letzte Minimum. Der Sprung von einem Maximum zu einem Minimum und der umgekehrte Sprung von einem Minimum zu einem Maximum repräsentiert eine Sehnenlänge.

Eine Mindestanzahl von Partikelübergängen muss pro Zeile gewährleistet sein, da sonst die Fläche der Partikel oder der Abstand zwischen den Partikeln zu groß wird. Da es sich um ein natürliches System handelt, steigt mit der geometrischen Länge der Abtastung eines Einzelpartikels in der Schüttung auch die Anzahl der verschiedenen Grauwerte innerhalb des Partikels. Unterscheiden sich diese Grauwerte über den eingestellten Schwellenwert hinaus, so werden innerhalb der Fläche eines Partikels weitere kleinere Partikel detektiert, die nicht vorliegen. Das Ergebnis wird verfälscht. Zur Absicherung der Ergebnisse ist somit eine statistisch abgesicherte Anzahl von Messungen sowie eine entsprechende Filterung der Bilddaten günstig.

Ein weiterer Ansatz zur Verbesserung des Verfahrens ist der Einsatz von dynamischen Parametern. Dabei werden nicht mehr die Schwellwerte direkt vorgegeben, sondern der Anteil der Punkte an der Gesamtzahl der Punkte der Eingangsdaten, die gefiltert werden sollen. So wird beispielsweise eine bestimmte Relation aller hellen und dunklen Bildpunkte gefiltert, ohne dass eine explizite Angabe der entsprechenden Filterwerte gemacht werden muss. Unsymmetrische Angabe führen zu einer stärkeren Gewichtung entweder der Partikel, die durch einen spezifischen Grauwertbereich der Bildpunkte repräsentiert sind, oder der Zwischräume, die durch einen anderen spezifischen Grauwertbereich der Bildpunkte repräsentiert sind.

Aufgrund der Detektion zwischen den Einzelpartikeln ist beim Extremwertverfahren eine Verschiebung der Sehnenlängenverteilung in dem Bereich größerer Partikel zu erwarten.

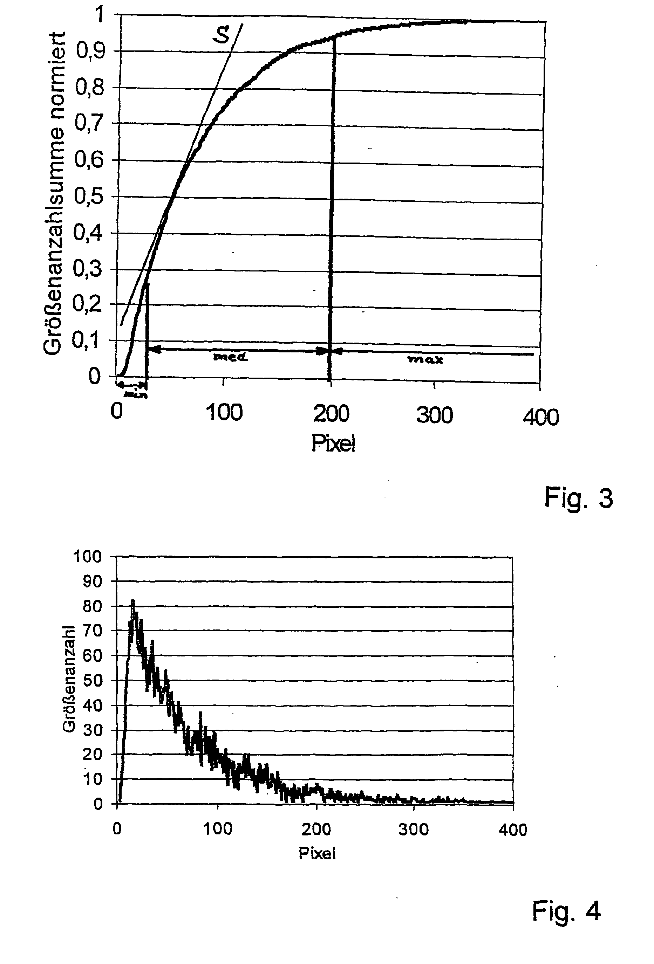

Aus den beispielhaft auf Pixel-Basis bestimmten Sehnenlängen wird die in der Figur 3 beispielhaft gezeigte Häufigkeitsverteilungsfunktion bestimmt, die die normierte Größenanzahlsumme der Sehnenlängen aufgetragen über die Sehnenlängen darstellt. Die Häufigkeitsverteilungsfunktion der Sehnenlängen zeigt somit die normierte Häufigkeit einer bestimmten Sehnenlänge im aufgenommenen Grauwertverlauf bzw. die Wahrscheinlichkeit, eine bestimmte Sehnenlänge im Grauwertverlauf aufzufinden.

Erfindungsgemäß wird diese Häufigkeitsverteilungsfunktion in drei Größenordnungen unterteilt. Hierbei ist ein Größenbereich für kleine Partikelgrößen von 3 bis 30 Pixeln bzw. etwa 42 $\mu$m bis 420 $\mu$m definiert. Ein weiterer Größenbereich für mittlere Partikelgrößen ist für Sehnenlängen zwischen 31 bis 200 Bildpixeln bzw. 434 $\mu$m bis 2,8 mm vorgesehen. Weiterhin ist ein Bereich für große Partikelgrößen von mehr als 2,8 mm mit einem Pixelbereich von größer als 201 Bildpixeln vorgesehen.

Erfindungsgemäß wird ein Steigungsparameter S als Steigung der Häufigkeitsverteilungsfunktion für die Summenhäufigkeit von 0,5, das heißt die Steigung der Häufigkeitsverteilungsfunktion im Mittelwert der normierten Größenanzahlsumme, berechnet. Dieser Steigungsparameter S ist als Tangente an der Häufigkeitsverteilungsfunktion am Punkt der Summenhäufigkeit von 0,5 dargestellt. Der Aufkonzentrierungsfaktor wird nunmehr in Abhängigkeit von dem Steigungsparameter S ermittelt. Es hat sich gezeigt, dass für beliebige Klärschlammqualitäten und Konditionierungsprozesse eine solche Abhängigkeit zwischen dem Steigungsparameter S und dem Aufkonzentrierungsfaktor gegeben ist, dass eine ausreichend sichere Bestimmung des Aufkonzentrierungsfaktors möglich ist.

Ein geringerer Wert des Steigungsparameters S deutet auf eine breitere, gleichmäßigere Verteilung der Dichtefunktion hin.

Aus der Häufigkeitsverteilungsfunktion werden weiterhin verschiedene Verhältnisparameter unter Berücksichtigung der beschriebenen Größenaufteilung berechnet und zur Bestimmung des Aufkonzentrierungsfaktors verwendet.

So wird ein Maximal-Teilchengrößenverhältnis $G_U$ aus dem Quotient der Anzahl der Partikel mit einer mittleren Partikelgröße $n_{med}$ zu der Anzahl der Partikel mit einer großen Partikelgröße $n_{max}$ mit der Formel

$$G_U = \frac{n_{med}}{n_{max}},$$

mit $n_i$ als Partikelanzahl im betrachteten Intervall.

Weiterhin kann ein Minimal-Teilchengrößenverhältnis $G_D$ aus dem Quotient der Anzahl der Partikel mit einer mittleren Partikelgröße $n_{med}$ zu der Anzahl der Partikel mit einer kleinen Partikelgröße $n_{min}$ aus der Formel

$$G_D = \frac{n_{med}}{n_{min}}$$

berechnet werden. Die Verhältnisparameter $G_U$ und $G_D$ geben somit die reziproke Summenanzahl der großen bzw. kleinen Partikel im Vergleich zu den mittleren Partikeln an.

Weiterhin kann ein Maximal-Minimal-Teilchengrößenverhältnis $G_E$ aus dem Quotienten der Anzahl der Partikel mit einer großen Partikelgröße $n_{max}$ zu der Anzahl der Partikel mit einer kleinen Partikelgröße $n_{min}$ nach der Formel

$$n_{max}$$

$$G_E = \frac{n_{med}}{n_{min}}$$

berechnet werden.

Die Teilchengrößenverhältnisse sind dimensionslose Kennzahlen, die unabhängig von der absoluten Anzahl der Partikel Aufschluss über die Größenstruktur der Klärschlämme geben.

Weiterhin kann ein sogenannter Integralparameter I zur Bestimmung des Aufkonzentrierungsfaktors aus dem Integral über die Summenverteilung der Summenhäufigkeit X von 0,1 bis 0,9 ($X_{10}$ bis $X_{90}$) berechnet werden. Der Integralparameter I bezeichnet die Gesamtanzahl der Pixel derjenigen Teilchen, die weder zu den 10% kleinsten Teilchen noch zu den 10% größten Teilchen gehören. Er kann nach der Formel

$$I(\aleph) = \int_{i=\aleph_{10}}^{\aleph_{90}} n_i \cdot G_i(\aleph), \text{ mit } G_i \text{ als Partikelgröße}$$

berechnet werden.

Weiterhin kann ein Volumenparameter V zur Bestimmung des Aufkonzentrierungsfaktors berechnet werden, wobei die mittlere Partikelgröße der drei Größenbereiche mit der Anzahl der Partikel in dem jeweiligen Größenbereich multipliziert und die Ergebnisse miteinander addiert werden. Der Volumenparameter V berechnet sich nach der Formel

$$V = n_{min} \cdot (MG_{min})^3 + n_{med} \cdot (MG_{med})^3 + n_{max} \cdot (MG_{max})^3,$$

mit $MG_i$ als mittlere Partikelgröße ($X_{50}$) im betrachteten Intervall.

Die Figur 4 zeigt ein beispielhaftes Dichtediagramm. Es ist erkennbar, dass die Anzahl der Partikel im kleinen Größenbereich zunächst stark zunehmend und von dort in dem Bereich der mittleren und kleinen Partikelgrößen exponentiell abnimmt.

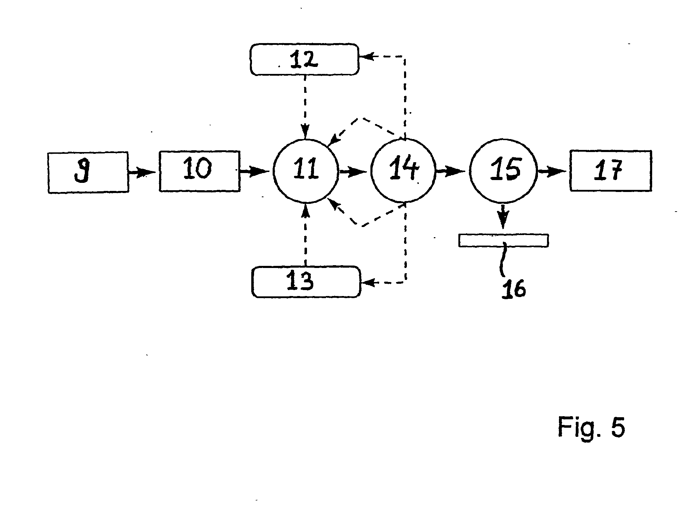

Die Figur 5 lässt ein Prozessflussdiagramm des Konditionierungsprozesses in einer Kläranlage und die Integration der Messanordnung zur automatischen Bestimmung des Aufkonzentrierungsfaktors in den Prozess erkennen. Der Klärschlamm aus der Abwasserbehandlung wird eingedickt und in einem Faulturm 9 verfault. Der Faulschlamm wird dem Faulturm 9 entzogen und in einem Stapelbehälter 10 vorgehalten. In einem nachfolgenden Flockungsprozess 11 werden Konditionierungsmittel 12 und Konditionierungshilfsmittel 13 dem zu entwässernden Klärschlamm zugesetzt. Dieser folgt aus den nachfolgend erläuterten Gründen.

Die mechanische Flüssigkeitsabtrennung aus Klärschlämmen wird im wesentlichen durch die Größe und Dichte der suspendierten Teilchen beeinflusst. Die Abtrennung wird mit kleiner werdenden Teilchen durch die geringere Porösität des Kuchens und den geringeren Dichteunterschieden zwischen Feststoff und Flüssigkeit schwieriger. Voraussetzung für einen hinreichend hohen Abscheidegrad ist jedoch eine spezifische Größenverteilung, eine hohe Porösität und eine hohe Festigkeit der Agglomerate. Eine dichte Packung des Schlammkuchens kommt nur zustande, wenn schon zu Beginn der Kuchenbildung der Aufbau eine hohe Porösität aufweist, damit das abgetrennte Wasser auch abfließen kann. Mit zunehmender Festigkeit der Agglomerate ist somit ein geringerer Filtrationswiderstand auch bei großer Druckdifferenz gewährleistet. Die Abscheideleistung ist nur solange gut, wie die Agglomerate in der Nähe des Filtermaterials den hohen Scherbeanspruchungen standhalten.

Das natürliche Entwässerungspotential von Klärschlämmen ist in Abhängigkeit von dem nachfolgenden Entwässerungsverfahren oftmals nicht ausreichend, um den gesetzlichen Entsorgungsvorschriften zu genügen. Der Trokkensubstanzgehalt der entwässerten Klärschlämme ist zumeist unzureichend.

Durch die Konditionierung werden Klärschlämme so verändert, dass ihre Eindickung und Entwässerung verbessert wird. Ziel des Prozesses ist es, den Klärschlamm in seinen Eigenschaften so zu ändern, dass ein optimales Entwässerungsergebnis erreicht werden kann. Hierbei werden Prozesse unterschieden, die das Wasserbindevermögen herabsetzen und solche, die zur Strukturänderung von Klärschlämmen führen. So wird durch die Zudosierung von bestimmten organischen und anorganischen Mitteln das Wasserbindevermögen herabgesetzt. Als Konditionierungsmittel werden anorganische Substanzen als Flockungsmittel eingesetzt. Konditionierungshilfs- bzw. Flockungshilfsmittel

**EP 1 373 145 B1**

sind organische Substanzen, die die Fest-Flüssig-Trennung von Abwasser und Klärschlamm unterstützen. Wirtschaftlich gesehen ist die Optimierung der Eigenschaften des Mediums günstiger als die eigentliche Optimierung des maschinellen Entwässerungs- und Trocknungsprozesses, zumal mit niedrigeren Kosten größere Effekte erzielt werden.

Nach dem Zusetzen der Konditionierungsmittel 12 und Konditionierungshilfsmittel 13 in den Flockungsprozess 11 wird der erreichte Aufkonzentrierungsfaktor mit der Messanordnung 14 bestimmt und der Flockungsreaktor und die Zugabemenge von Konditionierungsmitteln 12 und Konditionierungsmitteln 13 gesteuert. Anschließend wird der konditionierte Klärschlamm mechanisch in einer Filterpresse 15 entwässert und das Filtrat 16 in die Vorklärung abgeführt. Der entwässerte Klärschlammkuchen wird in einem Sammelbehälter 17 gesammelt und anschließend der weiteren zum Beispiel thermischen Verwertung zugeführt.

Im folgenden werden Versuchsergebnisse beispielhaft vorgestellt, die die Abhängigkeit von geeigneten Regelparametern zur erreichten Aufkonzentration zeigen und aus denen Proportionalitätskonstanten abgeleitet werden können.

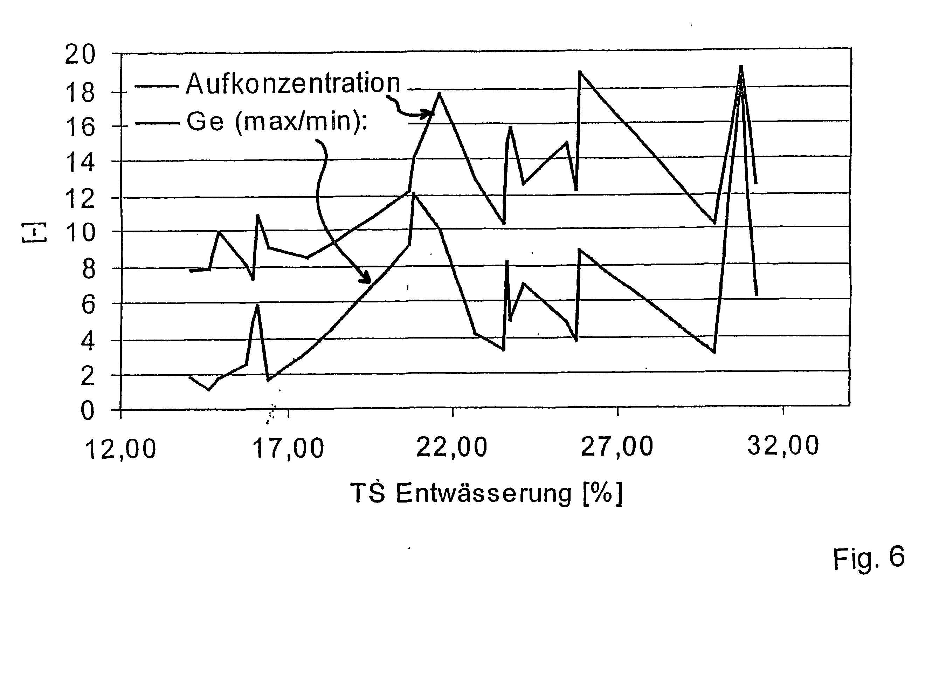

Die Figur 6 zeigt die Abhängigkeit des Maximal-Minimal-Teilchengrößenverhältnisses $G_E$ als Quotient der Anzahl der Partikel mit einer großen Partikelgröße zu der Anzahl der Partikel mit einer kleinen Partikelgröße sowie die erreichte Aufkonzentration vom Entwässerungsergebnis. Die obere Kurve a) zeigt den Verlauf der erreichten Aufkonzentration von dem Entwässerungsgrad. Nahezu proportional hierzu verläuft das Maximal-Minimal-Teilchengrößenverhältnis $G_E$, das somit als Mess- und Regelungsparameter für die Aufkonzentration geeignet ist.

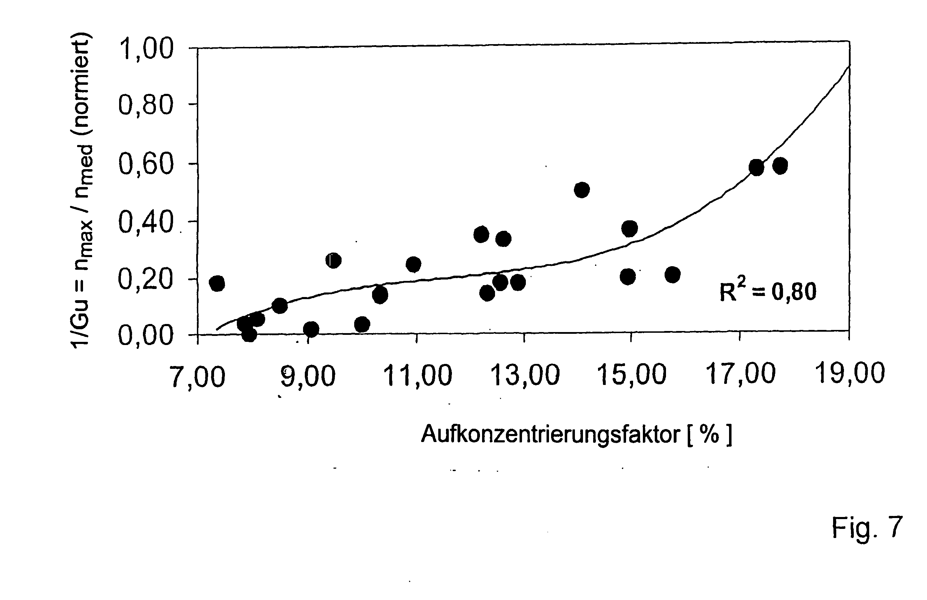

Die Figur 7 lässt ein Diagramm erkennen, dass die Abhängigkeit des Maximal-Teilchengrößenverhältnisses $G_U$ als Quotient der Anzahl der Partikel mit einer mittleren Partikelgröße zu der Anzahl der Partikel mit einer großen Partikelgröße in Abhängigkeit von der erreichten Aufkonzentration zeigt. Durch die in verschiedenen Versuchen berechneten Messpunkte wurde eine Kurve gelegt, wobei die Messpunkte als Kehrwert des Maximal-Teilchengrößenverhältnisses normiert dargestellt wird. Es hat sich gezeigt, dass der Kehrwert $1:G_U$ sich mit dem Faktor $R^2=0,80$ annähernd proportional zu dem Aufkonzentrierungsfaktor verhält.

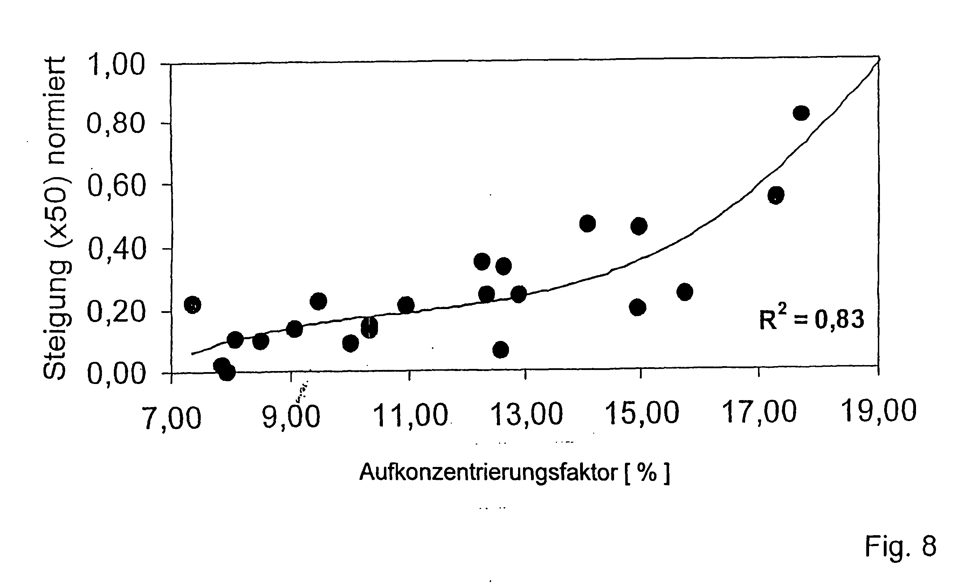

Die Figur 8 lässt ein Diagramm der Abhängigkeit des Steigungsparameters im Mittelwert der Häufigkeitsverteilungsfunktion von der erreichten Aufkonzentration darstellen. Wiederum wurden durch die in verschiedenen Versuchen gewonnenen Messpunkte durch eine optimal angepasste Messkurve beschrieben. Es hat sich herausgestellt, dass der normierte Steigungsparameter $X_{50}$ im Mittelwert der Häufigkeitsverteilungsfunktion der Sehnenlängen, das heißt der Funktion der Anzahl Summenverteilung, mit dem Faktor $R^2=0,83$ annähernd proportional zum Aufkonzentrierungsfaktor ist.

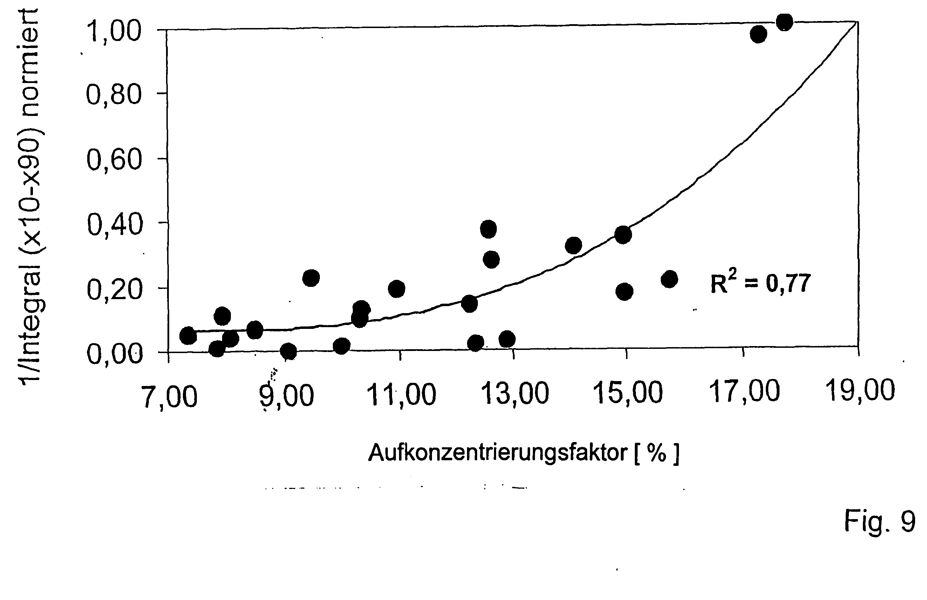

Die Figur 9 lässt ein Diagramm erkennen, in dem die Abhängigkeit des Kehrwerts des Integralparameters als Integral über die Häufigkeitsverteilung für Summenhäufigkeiten von 0,1 bis 0,9 ($X_{10}$ bis $X_{90}$) von der erreichten Aufkonzentration zeigt. Durch die in verschiedenen Versuchen berechneten Messpunkte wurde wiederum eine optimale Kurve gelegt. Wiederum ist eine annähernde Proportionalität des Integral parameters mit dem Aufkonzentrierungsfaktor zu erkennen, wobei ein Proportionalitätsfaktor von $R^2=0,77$ berechnet wurde.

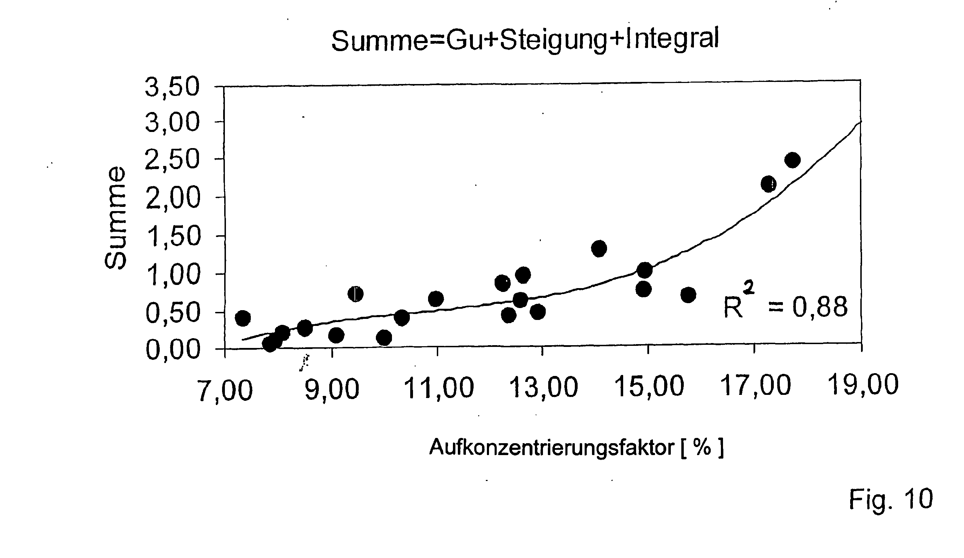

Die Figur 10 lässt ein Diagramm der Abhängigkeit eines Summenregelparameters als Summe des Maximal-Teilchengrößenverhältnisses $G_U$ des Steigungsparameters S und des Integralparameters I von der erreichten Aufkonzentration darstellt. Wiederum wurde durch die in verschiedenen Versuchen berechneten Werte des Summenregelparameters eine optimal angepasste Kurve gelegt. Es zeigt sich, dass diese Kurve mit dem Proportionalitätsfaktor $R^2=0,88$ eine hinreichend genaue Messung des Aufkonzentrierungsfaktors ermöglicht.

**Patentansprüche**

1.  Verfahren zur automatischen Bestimmung des Aufkonzentrierungsfaktors von konditioniertem Klärschlamm mit den Schritten:

    - Erfassen der Flockenstruktur des Klärschlammstroms (2) durch eindimensionale photooptische Auflichtmessung von Bildzeilen der Grauwertverläufe einer Klärschlammaufsicht quer zur Strömungsrichtung;
    - Bestimmen der Sehnenlängen der erfassten Flockenstruktur aus den Grauwertverläufen, wobei die Sehnenlänge der Abstand zwischen einem relativen Grauwert-Maximalwert und einem benachbarten relativen Grauwert-Minimalwert ist;
    - Berechnen der Häufigkeitsverteilung der Sehnenlängen;
    - Bestimmen des Aufkonzentrierungsfaktors in Abhängigkeit von Parametern, die aus den Sehnenlängen und der Häufigkeitsverteilung der Sehnenlängen ermittelt werden.

2.  Verfahren nach Anspruch 1, **gekennzeichnet durch**

    - Berechnen eines Steigungsparameters (S) als Steigung der Häufigkeitsverteilungsfunktion der Sehnenlängen für die Summenhäufigkeit von 0,5;
- Bestimmen des Aufkonzentrierungsfaktors in Abhängigkeit von dem Steigungsparameter (S).

**3.** Verfahren nach Anspruch 1 oder 2, **gekennzeichnet durch**

- Festlegen von Größenbereichen der Partikelgrößen, wobei ein Bereich (MIN) für kleine Partikelgrößen, ein Bereich (MED) für mittlere Partikelgrößen und ein Bereich (MAX) für große Partikelgrößen definiert wird;
- Bestimmen mindestens eines Verhältnisparameters (G) aus einem Verhältnis der Anzahl (n) von Partikeln mit einer Partikelgröße eines Größenbereiches zu der Anzahl (m) von Partikeln mit einer Partikelgröße eines anderen Größenbereiches;
- Bestimmen des Aufkonzentrierungsfaktors in Abhängigkeit von dem mindestens einen Verhältnisparameter (G).

**4.** Verfahren nach Anspruch 3, **gekennzeichnet durch** Berechnen eines Maximal-Teilchengrößenverhältnisses ($G_U$) als Verhältnisparameter aus dem Quotient der Anzahl ($n_{med}$) der Partikel mit einer mittleren Partikelgröße zu der Anzahl ($n_{max}$) der Partikel mit einer großen Partikelgröße.

**5.** Verfahren nach Anspruch 3 oder 4, **gekennzeichnet durch** Berechnen des Minimal-Teilchengrößenverhältnisses ($G_D$) als Verhältnisparameter aus dem Quotient der Anzahl der Partikel mit einer mittleren Partikelgröße ($n_{med}$) zu der Anzahl der Partikel mit einer kleinen Partikelgröße ($n_{min}$).

**6.** Verfahren nach einem der Ansprüche 3 bis 5, **gekennzeichnet durch** Berechnen eines Maximal-Minimal-Teilchengrößenverhältnisses ($G_E$) als Verhältnisparameter aus dem Quotient der Anzahl der Partikel mit einer großen Partikelgröße ($n_{max}$) zu der Anzahl der Partikel mit einer kleinen Partikelgröße ($n_{min}$).

**7.** Verfahren nach einem der Ansprüche 3 bis 5, **dadurch gekennzeichnet, dass** die Partikelgrößen des Größenbereiches für kleine Partikelgrößen 42 $\mu$m bis 430 $\mu$m betragen.

**8.** Verfahren nach einem der Ansprüche 3 bis 7, **dadurch gekennzeichnet, dass** die Partikelgrößen des Größenbereiches für mittlere Partikelgrößen 430 $\mu$m bis 2,8 mm betragen.

**9.** Verfahren nach einem der Ansprüche 3 bis 8, **dadurch gekennzeichnet, dass** die Partikelgrößen des Größenbereichs für große Partikelgrößen mehr als 2,8 mm betragen.

**10.** Verfahren nach einem der vorhergehenden Ansprüche, **gekennzeichnet durch**

- Berechnen des Integrals über die Häufigkeitsverteilung für Summenhäufigkeiten von 0,1 bis 0,9 als Integralparameter (I) mit der Formel:

$$I(\aleph) = \int_{i=\aleph_{10}}^{\aleph_{90}} n_i \cdot G_i(\aleph),$$

wobei $G_i$ die Partikelgröße und $n_i$ die Gesamtanzahl von Partikeln einer Partikelgröße $G_i$ ist;

- Bestimmen des Aufkonzentrierungsfaktors in Abhängigkeit von dem berechneten Integralparameter (I).

**11.** Verfahren nach einem der vorhergehenden Ansprüche, **gekennzeichnet durch**

- Berechnen eines Volumenparameters (V) als Parameter aus der Summe der Produkte der Anzahl (n) von Partikeln eines Größenbereichs mit der dritten Potenz der mittleren Partikelgröße (MG) in diesem Größenbereich für alle definierten Größenbereiche ($V = n_{min} (MG_{min})^3 + n_{med} \cdot (MG_{med})^3 + n_{max} \cdot (MG_{max})^3$).

**12.** Verfahren nach Anspruch 2, 4 und 10, **gekennzeichnet durch** Bestimmen des Aufkonzentrationsfaktors in Abhängigkeit von der Summe aus dem Maximal-Teilchengrößenverhältnis ($G_U$), dem Steigungsparameter (S) und dem Integralparameter (I).

13. Messanordnung (14) zur automatischen Bestimmung des Aufkonzentrationsfaktors von konditioniertem Klärschlamm mit

- einer Durchflussküvette (3) für den Klärschlammstrom (2) mit einem Sichtfenster (4);
- einer Bildzeilenkamera (5), die angrenzend an das Sichtfenster (4) angeordnet ist;
- einer Beleuchtungseinheit (6) zur Ausleuchtung des Klärschlammstroms (2);
- einer elektronischen Auswerteeinheit (7), die an die Bildzeilenkamera (5) angeschlossen ist und zur Durchführung des Verfahrens nach einem der vorhergehenden Ansprüche ausgebildet ist.

14. Messanordnung (14) nach Anspruch 12, **dadurch gekennzeichnet, dass** die Durchflussküvette (3) Mittel zur Erzeugung einer laminaren Strömung im Bereich des Sichtfensters (4) hat.

15. Messanordnung (14) nach einem der Ansprüche 13 oder 14, **dadurch gekennzeichnet, dass** die Auswerteeinheit (7) ein Steuerungssignal (8) zur Steuerung eines Flockungsapparates und/oder einer Konditioniermittelzugabe generiert.

16. Computerprogramm mit Programmcodemitteln ausgebildet zur Durchführung des Verfahrens nach einem der Ansprüche 1 bis 12, wenn das Computerprogramm auf einem Computer ausgeführt wird.

17. Computerprogramm mit Programmcodemitteln nach Anspruch 16, die auf einem computerlesbaren Datenspeicher gespeichert sind.

**Claims**

1. Method for automatic determination of the concentration factor of conditioned sewage sludge, having the following steps:

- detection of the flock structure of the sewage sludge flow (2) by one-dimensional photo-optical incident light measurement of image rows of the grey-scale profiles of a sewage sludge view transversely with respect to the flow direction;
- determination of the cord lengths of the detected flock structure from the grey-scale profiles, with the cord length being the distance between a relative grey-scale maximum value and an adjacent relative grey-scale minimum value;
- calculation of the probability distribution of the cord lengths;
- determination of the concentration factor as a function of parameters which are determined from the cord lengths and the probability distribution of the cord lengths.

2. Method according to Claim 1, **characterized by**

- calculation of a gradient parameter (S) as the gradient of the probability distribution function of the cord lengths for the total probability of 0.5;
- determination of the concentration factor as a function of the gradient parameter (S).

3. Method according to Claim 1 or 2, **characterized by**

- definition of size ranges of the particle sizes, with one range (MIN) being defined for small particle sizes, one range (MED) for medium particle sizes, and one range (MAX) for large particle sizes;
- determination of at least one ratio parameter (G) from the ratio of the number (n) of particles with a particle size in one size range to the number (m) of particles with a particle size in another size range;
- determination of the concentration factor as a function of the at least one ratio parameter (G).

4. Method according to Claim 3, **characterized by** calculation of a maximum particle size ratio ($G_U$) as a ratio parameter from the quotient of the number ($n_{med}$) of particles with a medium particle size to the number ($n_{max}$) of particles with a large particle size.

5. Method according to Claim 3 or 4, **characterized by** calculation of the minimum particle size ratio ($G_D$) as a ratio parameter from the quotient of the number of particles with a medium particle size ($n_{med}$) to the number of particles with a small particle size ($n_{min}$).

6. Method according to one of Claims 3 to 5, **characterized by** calculation of a maximum/minimum particle size ratio ($G_E$) as a ratio parameter from the quotient of the number of particles with a large particle size ($n_{max}$) to the number of particles with a small particle size ($n_{min}$).

7. Method according to one of Claims 3 to 5, **characterized in that** the particle sizes in the size range for small particle sizes are 42 $\mu$m to 430 $\mu$m.

8. Method according to one of Claims 3 to 7, **characterized in that** the particle sizes in the size range for medium particle sizes are 430 $\mu$m to 2.8 mm.

9. Method according to one of Claims 3 to 8, **characterized in that** the particle sizes in the size range for large particle sizes are more than 2.8 mm.

10. Method according to one of the preceding claims, **characterized by**

   - calculation of the integral over the probability distribution for total probabilities from 0.1 to 0.9 as an integral parameter (I), using the formula:

$$I(\aleph) = \int_{\aleph_{min}}^{\aleph_{max}} n \cdot G(\aleph),$$

   where $G_i$ is the particle size and $n_I$ is the total number of particles of a particle size $G_i$;

   - determination of the concentration factor as a function of the calculated integral parameter (I).

11. Method according to one of the preceding claims, **characterized by**

   - calculation of a volume parameter (V) as a parameter from the total of the products of the number (n) of particles in one size range by the third power of the mean particle size (MG) in this size range for all defined size ranges (V=$n_{min}$

$$(MG_{min})^3 + n_{med} \cdot (MG_{med})^3 + n_{max} \cdot (MG_{max})^3).$$

12. Method according to Claim 2, 4 and 10, **characterized by** determination of the concentration factor as a function of the total of the maximum particle size ratio ($G_U$), the gradient parameter (S) and the integral parameter (I).

13. Measurement arrangement (14) for automatic determination of the concentration factor of conditioned sewage sludge, having

   - a flow-through cell (3) for the sewage sludge flow (2) with a viewing window (4);
   - an image row camera (5), which is arranged adjacent to the viewing window (4);
   - an illumination unit (6) for illumination of the sewage sludge flow (2);
   - an electronic evaluation unit (7), which is connected to the image row camera (5) and is designed to carry out the method according to one of the preceding claims.

14. Measurement arrangement (14) according to Claim 12, **characterized in that** the flow-through cell (3) has means for production of a laminar flow in the area of the viewing window (4).

15. Measurement arrangement (14) according to one of Claims 13 or 14, **characterized in that** the evaluation unit (7) generates a control signal (8) for controlling a flocking apparatus and/or conditioning agent supply.

16. Computer program with program code means, designed to carry out the method according to one of Claims 1 to 12 when the computer program is run on a computer.

17. Computer program with program code means according to Claim 16, which are stored on a computer-legible data storage medium.

**Revendications**

1. Procédé pour déterminer automatiquement le facteur de concentration de boues de curage conditionnées comportant les étapes :

    - saisir la structure floconneuse du courant des boues de curage (2) par la mesure unidimensionnelle photooptique de lumière réfléchie de lignes de balayage, de l'évolution de la valeur de gris de la surface des boues de curage transversalement à la direction du courant ;
    - déterminer les longueurs de corde de la structure floconneuse saisie à partir des évolutions de la valeur de gris, la longueur de corde étant égale à l'écart compris entre une valeur relative maximale de la valeur de gris et une valeur voisine relative minimale de la valeur de gris ;
    - calculer la répartition de la fréquence des longueurs de corde ;
    - déterminer le facteur de concentration en fonction de paramètres qui sont obtenus à partir des longueurs de corde et de la répartition de la fréquence des longueurs de cordes.

2. Procédé selon la revendication 1, **caractérisé par**

    - le calcul d'un paramètre de croissance (S) en tant que croissance de la fonction de répartition de la fréquence des longueurs de corde pour la somme de fréquences de 0,5 ;
    - la détermination du facteur de concentration en fonction du paramètre de croissance (S).

3. Procédé selon la revendication 1 ou 2, **caractérisé par**

    - la définition de zones de grosseurs de particules, une zone (MIN) pour des petites grosseurs de particules, une zone (MED) pour des grosseurs moyennes de particules et une zone (MAX) pour des grosses grosseurs de particules étant définies ;
    - la détermination d'au moins un paramètre de proportion (G) à partir d'un nombre (n) de particules avec une grosseur de particules d'une zone de grosseur par rapport au nombre (m) de particules ayant une grosseur de particules d'une autre zone de grosseurs ;
    - la détermination du facteur de concentration en fonction d'au moins ledit paramètre de proportion (G).

4. Procédé selon la revendication 3, **caractérisé par** le calcul d'une proportion maximale de grosseur de particules ($G_u$) en tant que paramètre de proportion à partir du quotient du nombre ($n_{med}$) des particules ayant une grosseur de particules moyenne sur le nombre ($n_{max}$) des particules ayant une grosse grosseur de particule.

5. Procédé selon la revendication 3 ou 4, **caractérisé par** le calcul d'une proportion minimale de grosseur de particules ($G_D$) en tant que paramètre de proportion à partir du quotient du nombre des particules ayant une grosseur de particule moyenne ($n_{med}$) sur le nombre de particules ayant une petite grosseur de particule ($n_{min}$).

6. Procédé selon l'une des revendications 3 à 5, **caractérisé par** le calcul d'une proportion maximale et minimale de grosseur de particules ($G_E$) en tant que paramètre de proportion à partir du quotient du nombre de particules ayant une grosse grosseur de particule ($n_{max}$) sur le nombre de particules ayant une petite grosseur de particule ($n_{min}$).

7. Procédé selon l'une des revendications 3 à 5, **caractérisé en ce que** les grosseurs de particules de la zone de grosseur pour des petites grosseurs de particule sont comprises entre 42 $\mu$m et 430 $\mu$m.

8. Procédé selon l'une des revendications 3 à 7, **caractérisé en ce que** les grosseurs de particules de la zone de grosseur pour les grosseurs de particules moyennes sont comprises entre 430 $\mu$m et 2,8 mm.

9.  Procédé selon l'une des revendications 3 à 8, **caractérisé en ce que** les grosseurs de particules de la zone de grosseur pour les grosses grosseurs de particules sont supérieures à 2,8mm.

10. Procédé selon l'une des revendications précédentes, **caractérisé par**

    - le calcul de l'intégrale sur la répartition de la fréquence pour les sommes de fréquences de 0,1 à 0,9 en tant que paramètre d'intégrale (I) avec la formule :

$$I(\aleph) = \int_{i=\aleph_{10}}^{\aleph_{\mathrm{pa}}} n \cdot G_I(\aleph),$$

    dans laquelle $G_I$ est la grosseur de particule et $n_I$ est le nombre total de particules ayant une grosseur de particule $G_I$ ;

    - la détermination d'un facteur de concentration en fonction du paramètre d'intégrale (I) calculé.

11. Procédé selon l'une des revendications précédentes, **caractérisé par**

    - le calcul d'un paramètre de volume (V) en tant que paramètre à partir de la somme de produit du nombre (n) de particules d'une zone de grosseur avec la puissance trois des grosseurs de particules moyennes (MG) dans cette zone de grosseur pour toutes les zones de grosseurs définies ($V = n_{min.} (MG_{min})^3 + n_{med.} (MG_{med})^3 + n_{max.} (MG_{max})^3$).

12. Procédé selon la revendication 2, 4 et 10, **caractérisé par** la détermination du facteur de concentration en fonction de la somme de la proportion maximale de grosseurs de particules ($G_u$), du paramètre de croissance (S) et du paramètre d'intégrale (I).

13. Dispositif de mesure (14) pour la détermination automatique du facteur de concentration de boues de curage conditionnées comprenant

    - une cuvette de passage (3) pour le courant (2) de la boue de curage comportant une fenêtre de vision (4) ;
    - une caméra à lignes de balayage (5) qui est disposée à proximité de la fenêtre de vision (4) ;
    - une unité d'illumination (6) pour illuminer le courant de boue de curage (2) ;
    - une unité d'évaluation électronique (7) qui est connectée à la caméra à ligne de balayage (5) qui est adaptée pour mettre en oeuvre le procédé selon l'une des revendications précédentes.

14. Dispositif de mesure (14) selon la revendication 13, **caractérisé en ce que** la cuvette de passage (3) comporte un moyen pour obtenir un courant laminaire dans la région de la fenêtre de vision (4).

15. Dispositif de mesure (14) selon l'une des revendications 13 ou 14, **caractérisé en ce que** l'unité d'évaluation (7) génère un signal de commande (8) pour commander un appareil de floculation et/ou une alimentation en produit de conditionnement.

16. Programme d'ordinateur comportant des moyens de codage de programme adapté pour mettre en oeuvre le procédé selon l'une des revendications 1 à 12, lorsque le programme d'ordinateur est mis en oeuvre dans un ordinateur.

17. Programme d'ordinateur comportant des moyens de codage de programme selon la revendication 16, qui sont mémorisés dans une mémoire de données lisibles par un ordinateur.

Fig. 1

a)          b)          Fig. 2

Fig. 3

Fig. 4

Fig. 5

Fig. 6

EP 1 373 145 B1

Fig. 7

Fig. 8

Fig. 9

Summe=Gu+Steigung+Integral

R² = 0,88

Aufkonzentrierungsfaktor [ % ]

Fig. 10

EP 1 373 145 B1